(19) **Europäisches Patentamt / European Patent Office / Office européen des brevets**

(11) **EP 2 610 079 B1**

(12) **EUROPEAN PATENT SPECIFICATION**

(45) Date of publication and mention
of the grant of the patent:
**19.04.2017 Bulletin 2017/16**

(21) Application number: **11820055.9**

(22) Date of filing: **26.08.2011**

(51) Int Cl.:
***B60C 11/01*** *(2006.01)*     ***B60C 11/11*** *(2006.01)*
***B60C 11/13*** *(2006.01)*

(86) International application number:
**PCT/JP2011/069336**

(87) International publication number:
**WO 2012/026595 (01.03.2012 Gazette 2012/09)**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.08.2010 JP 2010189647**

(43) Date of publication of application:
**03.07.2013 Bulletin 2013/27**

(73) Proprietor: **Bridgestone Corporation
Tokyo 104-8340 (JP)**

(72) Inventor: **KAWAKAMI, Yuki
Tokyo 187-8531 (JP)**

(74) Representative: **Lamb, Martin John Carstairs
Marks & Clerk LLP
90 Long Acre
London WC2E 9RA (GB)**

(56) References cited:
**WO-A1-2007/032405**     **JP-A- 2004 268 809**
**JP-A- 2006 111 088**     **JP-A- 2007 030 547**

## Description

## TECHNICAL FIELD

The present invention relates to a tire including: a bead portion; a sidewall portion continuously extended from the bead portion; a tread portion configured to come into contact with a road surface; and a buttress portion extending inward in a tire radial direction from a tread end portion and continuously extended from the sidewall portion, the tread end portion being an outer end portion of the tread portion in a tread width direction.

## BACKGROUND ART

Rubber materials having viscoelastic properties exhibit hysteresis behavior. Thus, a tire's tread portion generates heat as it deforms and contracts repeatedly through rotation. Increase in the amount of the rubber material constituting the tread portion leads to increase in the hysteresis loss due to the bending deformation and shearing deformation in rotation of the tire. Accordingly, a tire with a thicker tread portion is more likely to experience temperature increase.

Specifically, large-sized tires designed for large-sized vehicles for use in mines, construction sites, etc. contain a large amount of rubber material used therein and, in addition, are used with heavy loads thereon on rough road surfaces under harsh traction conditions. Since tires deform and contact repeatedly, large tires are characterized as being more likely to generate heat. If a tire's temperature becomes high during travel, that temperature can lead, for example, to separation of the rubber material forming the tread portion from the belt layer, which in turn shortens the tire replacement cycle.

In this respect, methods have heretofore been known in which sub-grooves extending in the tread width direction are formed in the tread portion to reduce the amount of the rubber material being a source of the heat generation, and also to increase the surface area of the tread portion to thereby facilitate heat dissipation of the tread portion (Patent Document 1, for example).

Attention is drawn to the disclosure of JP 2007-030547 and JP 2009-268809.

## PRIOR ART DOCUMENT

## PATENT DOCUMENT

Patent Document 1: Japanese Patent Application Publication No. 2003-205706, Fig. 1 and the like

## SUMMARY OF THE INVENTION

However, the conventional tires have the following problem. The heat dissipation can be facilitated by forming lateral grooves (sub-grooves) crossing the tire circumferential direction and thus increasing the groove area. Increasing the groove area, however, leads to reduction in the rigidity of the tread portion and reduction in the wear resistance thereof. As described above, there is a trade-off between the heat dissipation performance of a tire and the rigidity of the tire. Hence, there is a limitation in securing the heat dissipation performance by increasing the groove area.

Therefore, an object of the present invention is to provide a tire capable of securely achieving improved heat dissipation performance without impairing the rigidity and wear resistance of its tread portion.

To solve the above problem, one aspect of the present invention provides a tire according to claim 1.

In the tire according to the first aspect of the invention, the first protrusions are formed in the buttress. Thus, an airflow around the tire is disturbed by the protrusions and taken into the corresponding lateral groove portions, thereby increasing the flow volume of air flowing inside the lateral grooves. As a result, the heat transfer coefficient inside the lateral grooves is improved. Accordingly, the temperature of the land portions can be reduced. Further, the temperature of the tread portion can be lowered.

A second aspect of the present provides a tire according to claim 2.

In the tire according to the second aspect of the present invention, the protrusion is formed on the side surface of each of the land portions that crosses the width direction of the tread portion. Thus, air flowing over the surface of the tire hits the protrusion and gets disturbed. Since the protrusion is located near each of the lateral grooves formed between the land portions, an airflow around the tire is disturbed by the protrusion and thereby taken into the lateral groove.

The air gap is formed between the most protruded portion of the protrusion from the side surface in the tread width direction and the side surface of the adjacent land portion in the width direction of the tread portion crossing the width direction of the tread portion. Thus, air taken into the circumferential groove portion flows into the lateral groove portion. As a result, the heat transfer coefficient inside the lateral groove is improved. Accordingly, the temperature of the land portions can be reduced. Further, the temperature of the tread portion can be lowered.

Each protrusion may be formed near the lateral or lateral groove portion located on one side with respect to a center of the corresponding land portion in the circumferential direction, and the other side of the side surface with respect to the center of the corresponding land portion in the circumferential direction may be almost flat and smooth.

Each protrusion may have a rectangular shape extending in the tire radial direction, and p < 0.4W may be satisfied, where p is a length, within a section of the land portion defined by the lateral grooves or lateral groove portions, from an end portion of the side surface in the tire circumferential direction to a protrusion center line set at a center of the corresponding protrusion in the tire circumferential direction and extending in a lengthwise direction of the corresponding protrusion, and W is a pitch of the lateral grooves or lateral groove portions between the land portions.

An angle $\theta$ between the protrusion center line and a tire normal line may satisfy $|\theta| \leq 60°$.

The tire normal line may coincide with the lengthwise direction of the rectangular shape.

$2.00 \leq$ W/Lw may be satisfied, where Lw is a length of each protrusion in the tread width direction, and W is a pitch of the lateral grooves or lateral groove portions.

$0 \leq$ Lr < WB/2 may be satisfied, where WB is a length of each of the land portions in the tire circumferential direction, and Lr is a length of each protrusion in the tire circumferential direction.

$0.10 \leq$ Lh/H may be satisfied, where Lh is a length of each protrusion in the tire radial direction, and H is a length of each of the land portions in the tire radial direction from a groove bottom of each of the lateral grooves or lateral groove portions defining the land portions.

The lateral grooves or lateral groove portions may be tilted with respect to a tread-width-direction line extending in the tread width direction, and each protrusion may be provided in an end-portion region including an end portion of the corresponding land portion on a side where an angle between a side surface of the land portion extending in the tire circumferential direction and a wall surface of the corresponding lateral groove or lateral groove portion is an acute angle.

[DELETED]

BRIEF DESCRIPTION OF THE DRAWINGS

[Fig. 1] Fig. 1 is a perspective view of a pneumatic tire according to an embodiment, which is not according to the invention, but which is useful for understanding the invention.

[Fig. 2] Fig. 2 is a cross-sectional view of the pneumatic tire according to the embodiment taken along the tread width direction and the tire radial direction.

[Fig. 3] Fig. 3 is an enlarged perspective view of an enlarged version of the tread of the pneumatic tire.

[Fig. 4] Fig. 4 is a side view seen in the direction of an arrow A in Fig. 3.

[Fig. 5] Fig. 5 is a plan view seen in the direction of an arrow B in Fig. 3. Portion (a) of Fig. 5 is a schematic view describing airflows generated when the pneumatic tire 1 is rotated in a rotation direction R1, while Portion (b) of Fig. 5 is a schematic view describing airflows generated when the pneumatic tire 1 is rotated in a rotation direction R2.

[Fig. 6] Portion (a) of Fig. 6 is a schematic view describing airflows generated when a pneumatic tire 2, which is not according to the invention, but which is useful for understanding the invention, is rotated in the rotation direction R1, while Portion (b) of Fig. 6 is a schematic view describing airflows generated when the pneumatic tire 2 is rotated in the rotation direction R2.

[Fig. 7] Fig. 7 is a plan view of a pneumatic tire, which is according to the present invention, seen in a direction perpendicular to its tread surface, the pneumatic tire being shown as a modification of the embodiment.

[Fig. 8] Fig. 8 is a view describing modifications of the shape of protrusions of the embodiment.

MODES FOR CARRYING OUT THE INVENTION

Embodiments of a pneumatic tire 1 will be described with reference to the drawings. Specifically, description will be given of (1) Inner Configuration of Pneumatic Tire, (2) Description of Protrusions, (3) Operations and Effects, (4) Modifications, and (5) Other Embodiments.

Note that, in the following description of the drawings, the same or similar reference numerals denote the same or similar portions. However, it should be noted that the drawings are schematic, and dimensional ratios and the like are different from the actual ones. Therefore, specific dimensions and the like should be determined in consideration of the following description. Moreover, the drawings also include portions having different dimensional relationships and ratios from each other.

(1) Configuration of Pneumatic Tire

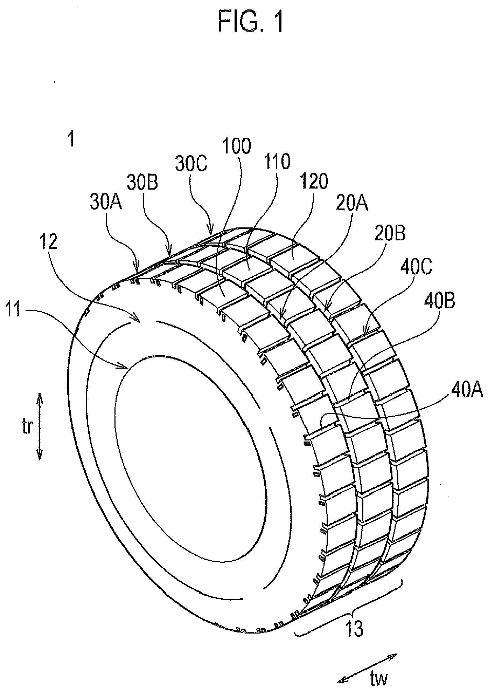

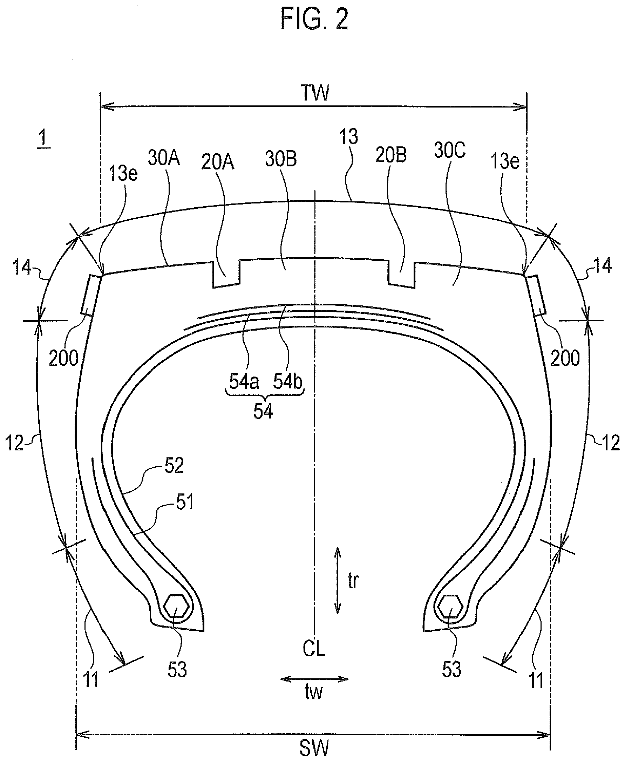

Fig. 1 is a perspective view of the pneumatic tire 1 according to an embodiment. Fig. 2 is a cross-sectional view of the pneumatic tire 1 taken along a tread width direction tw and a tire radial direction tr.

As shown in Fig. 2, the pneumatic tire 1 includes: bead portions 11 in contact with rims; sidewall portions 12 forming the side surfaces of the tire; a tread portion 13 configured to come into contact with the road surface; and buttress portions 14 located between the sidewall portions 12 and the tread portion 13, respectively.

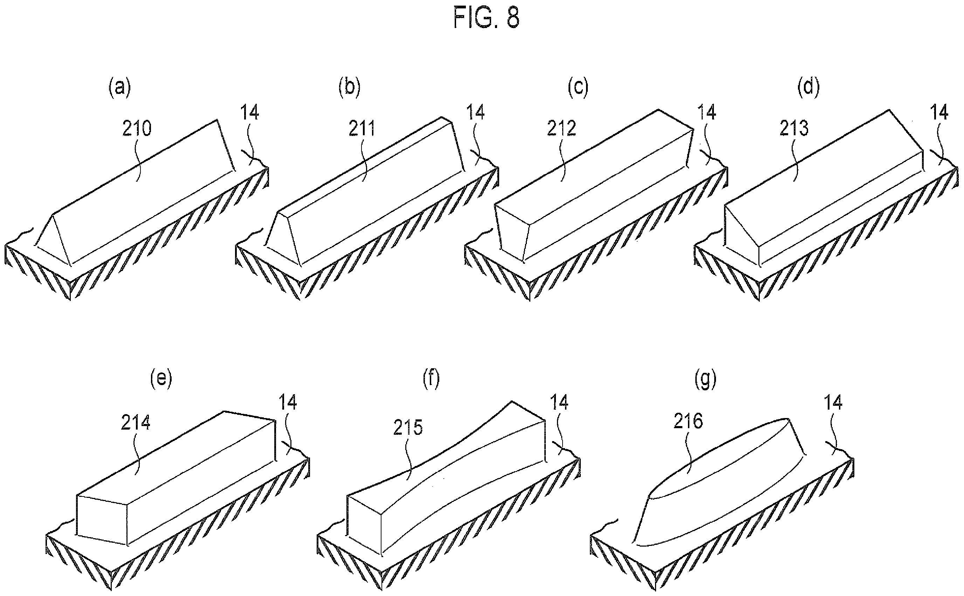

The buttress portions 14 are located as extensions of the sidewall [Fig. 8] Fig. 8 is a view describing modifications of the shape of protrusions of the embodiment.

**MODES FOR CARRYING OUT THE INVENTION**

Embodiments of a pneumatic tire 1 according to the present invention will be described with reference to the drawings. Specifically, description will be given of (1) Inner Configuration of Pneumatic Tire, (2) Description of Protrusions, (3) Operations and Effects, (4) Modifications, and (5) Other Embodiments.

Note that, in the following description of the drawings, the same or similar reference numerals denote the same or similar portions. However, it should be noted that the drawings are schematic, and dimensional ratios and the like are different from the actual ones. Therefore, specific dimensions and the like should be determined in consideration of the following description. Moreover, the drawings also include portions having different dimensional relationships and ratios from each other.

(1) Configuration of Pneumatic Tire

Fig. 1 is a perspective view of the pneumatic tire 1 according to an embodiment. Fig. 2 is a cross-sectional view of the pneumatic tire 1 taken along a tread width direction tw and a tire radial direction tr.

As shown in Fig. 2, the pneumatic tire 1 includes: bead portions 11 in contact with rims; sidewall portions 12 forming the side surfaces of the tire; a tread portion 13 configured to come into contact with the road surface; and buttress portions 14 located between the sidewall portions 12 and the tread portion 13, respectively.

The buttress portions 14 are located as extensions of the sidewall portions 12 in the tire radial direction and are portions that connect to the side surfaces of the tread portion 13, respectively. The buttress portions 14 extend inward in the tire radial direction tr from tread end portions 13e which are outer end portions of the tread portion 13 in the tread width direction, respectively. The buttress portions 14 are portions configured not to come into contact with the ground during normal travel.

Circumferential grooves 20A and 20B extending in the tire circumferential direction are formed in the tread portion 13. Moreover, circumferential land portions 30A, 30B, and 30C are formed which are defined by the circumferential grooves 20A and 20B.

As show in Fig. 1, lateral grooves 40A crossing the tire circumferential direction are formed in the circumferential land portion 30A. Lateral grooves 40B crossing the tire circumferential direction are formed in the circumferential land portion 30B. Lateral grooves 40C crossing the tire circumferential direction are formed in the circumferential land portion 30C. The circumferential land portions 30A, 30B, and 30C are divided by their lateral grooves 40A, 40B, and 40C to form land-portion blocks 100, 110, and 120. Moreover, the lateral grooves 40A, 40B, and 40C communicate with the circumferential groove 20A or 20B.

The pneumatic tire 1 includes a carcass layer 51 serving as a frame of the pneumatic tire 1. Provided on the inner side, in the tire radial direction, of the carcass layer 51 is an inner liner 52 being a highly airtight rubber layer equivalent to a tube. Both ends of the carcass layer 51 are supported by a pair of beads 53.

A belt layer 54 is arranged on the outer side, in the tire radial direction, of the carcass layer 51. The belt layer 54 includes a first belt layer 54a and a second belt layer 54b which are rubber-coated steel cords. The steel cords forming the first belt layer 54a and the second belt layer 54b are each arranged at a certain angle with respect to a tire equator line CL. The tread portion 13 is arranged on the outer side, in the tire radial direction, of the belt layer 54 (the first belt layer 54a and second belt layer 54b).

The pneumatic tire 1 includes, in each buttress portion 14, protrusions 200 protruding in the tread width direction.

SW represents the total width of the pneumatic tire in the tread width direction. TW represents the width of the tread portion 13 of the pneumatic tire 1 in the tread width direction. The pneumatic tire 1 may be filled with an inert gas such as nitrogen gas instead of air. In the embodiment, the pneumatic tire 1 is, for example, a radial tire having an aspect ratio of 80% or smaller, a rim diameter of 57" or greater, a load bearing capacity of 60 mton or greater, and a load factor (k-factor) of 1.7 or greater.

(2) Description of Protrusions

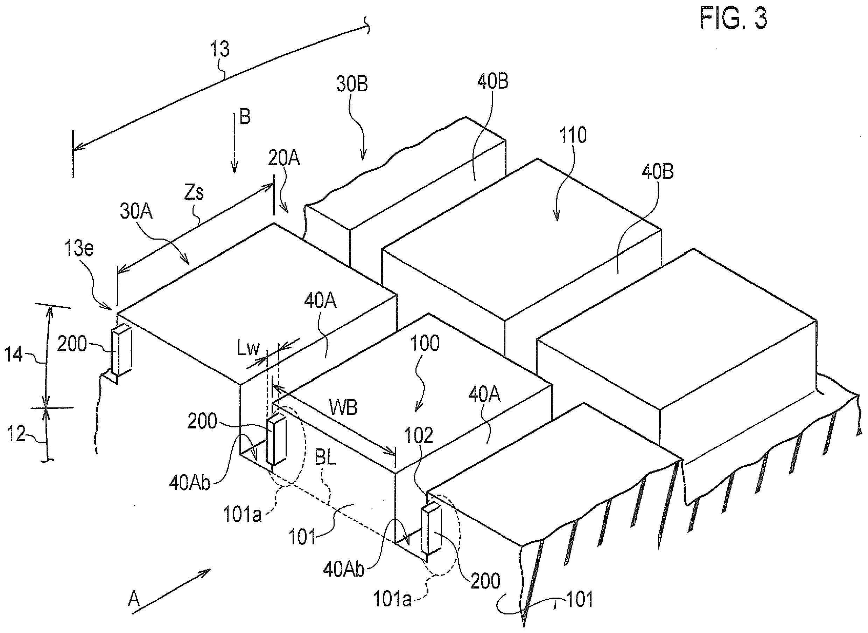

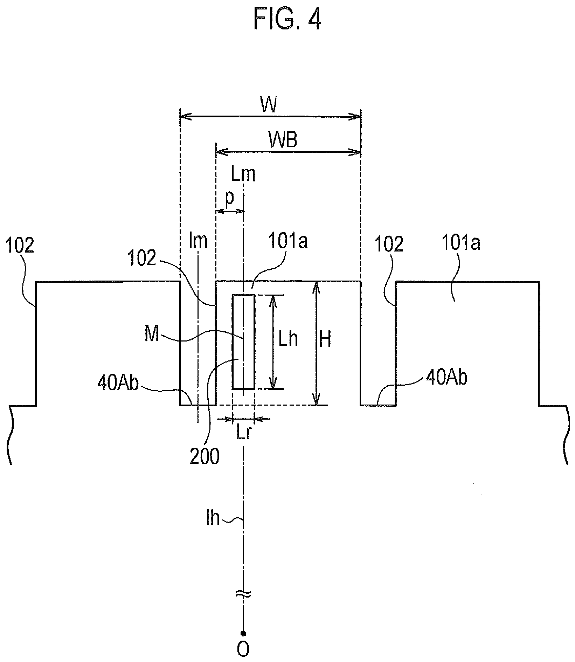

Fig. 3 is an enlarged perspective view of an enlarged version of the tread portion 13 of the pneumatic tire 1. Fig. 4 is a side view seen in the direction of an arrow A in Fig. 3.

Each protrusion 200 is formed on a side surface 101 of the land-portion block 100 near the lateral groove located on one side with respect to the center of the land-portion block 100 in the tire circumferential direction. Specifically, the protrusion 200 is provided in an end-portion region 101a including an end portion 102 of the side surface 101 of the land-portion block 100 in the tire circumferential direction. The other side of the side surface 101 with respect to the center of the land-portion block 100 in the circumferential direction is almost flat and smooth. Here, being almost flat and smooth refers to a state where slight asperities due to manufacturing errors are tolerated. The slight asperities refer, for example, to asperities within ±10% of a length Zs of the land-portion block 100 in the tread width direction.

The length of the protrusion 200 in the tire circumferential direction is smaller than a length WB of the land-portion block 100, which is defined by the lateral grooves 40A formed in the circumferential land portion 30A, in the tire circumferential direction.

The protrusion 200 has a rectangular shape extending straightly in the tire radial direction. The lengthwise direction of the rectangular shape may be tilted with respect to the tire radial direction. In this case, an angle $\theta$ between a protrusion center line Lm set at a center M of the protrusion 200 in the tire circumferential direction and a tire normal line lh may be $|\theta| \leq 60°$. In the embodiment, the protrusion 200 is arranged such that the tire radial direction and the lengthwise direction of the rectangular shape coincide with each other and that the tread width direction and the widthwise direction of the rectangular shape coincide with each other.

The pneumatic tire 1 satisfies the following formula, where Lw is the length of the protrusion 200 in the tread width direction from the side surface 101 of the land-portion block 100, SW is the total width of the pneumatic tire 1, and TW is the width of the tread portion 13 (see Fig. 1).

$$Lw \leq (SW-TW)/2$$

Moreover, the pneumatic tire 1 satisfies the following formula, where Lh is defined as the length of the protrusion 200 in the tire radial direction, and H is defined as the length of the land-portion block 100 in the tire radial direction from a groove bottom 40Ab.

$$0 < H/Lh \leq 10$$

Furthermore, the pneumatic tire 1 satisfies the following formulas, where p is the length from the end portion 102 of the side surface 101 of the land-portion block 100 in the tire circumferential direction to the protrusion center line Lm set at the center M of the protrusion 200 in the tire circumferential direction, Lw is the length of the protrusion 200 in the tread width direction, W is the pitch of the lateral grooves 40, WB is the length of the land-portion block 100 in the tire circumferential direction, and Lr is the length of the protrusion 200 in the tire circumferential direction.

$$0 < p/Lw < 20$$

$$p < WB$$

$$p < 0.4W$$

$$0 \leq Lw < W/2$$

$$0 \leq Lr < WB/2$$

(3) Operations and Effects

In the pneumatic tire 1, the protrusions 200 are formed in each buttress portion 14 being a side surface of each land-portion 100 parallel to the tire circumferential direction. Thus, the protrusions 200 receive relative winds generated by rotation of the pneumatic tire 1 in the direction opposite to the direction of the rotation. Airflows passing over the surface of the pneumatic tire 1 are disturbed by hitting the protrusions 200 and taken into the lateral grooves 40 formed between the land-portion blocks 100.

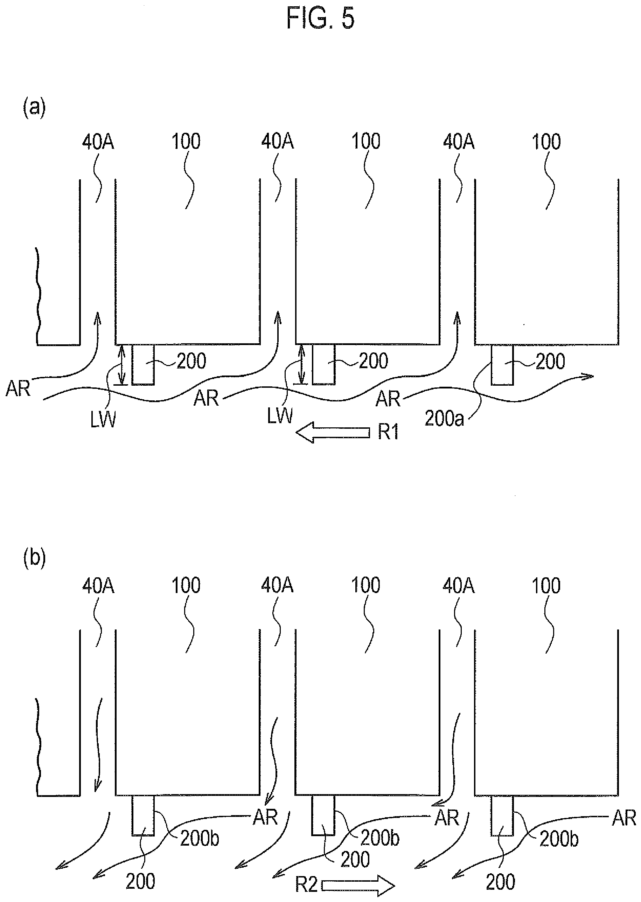

Portion (a) of Fig. 5 is a plan view seen in the direction of an arrow B in Fig. 3 and is a schematic view describing airflows generated when the pneumatic tire 1 is rotated in a rotation direction R1. Portion (b) of Fig. 5 is a plan view seen in the direction of the arrow B in Fig. 3 and is a schematic view describing airflows generated when the pneumatic tire 1 is rotated in a rotation direction R2.

As shown in Portion (a) of Fig. 5, when the pneumatic tire 1 is rotated in the rotation direction R1, airflows (relative winds) AR resulting from the rotation hit side surfaces 200a of the protrusions 200 formed in the buttress portion 14 and are taken into the lateral grooves 40A. As described above, the airflows AR around the pneumatic tire 1 are taken into the lateral grooves 40A, thereby increasing the flow volumes of air flowing inside the lateral grooves 40A. As a result, the heat transfer coefficient inside the lateral grooves 40A is improved. Accordingly, increase in the temperature of the land-portion blocks 100 can be reduced. Further, increase in the temperature of the tread portion 13 can be reduced.

Moreover, as shown in Portion (b) of Fig. 5, when the pneumatic tire 1 is rotated in the rotation direction R2, airflows (relative winds) AR resulting from the rotation hit side surfaces 200b of the protrusions 200 formed in the buttress portion 14 and flow over the protrusions 200. When this occurs, an airflow toward the outer side in the width direction is generated in the rear, in the rotation direction, of the side surface 200b of each of the protrusions 200. These airflows suck air through the lateral grooves 40A and the circumferential groove 20A and thus generate the airflows AR flowing outward from the lateral grooves 40A. As a result, the heat transfer coefficient inside the lateral grooves 40A is improved. Accordingly, increase in the temperature of the land-portion blocks 100 can be reduced. Further, increase in the temperature of the tread portion 13 can be reduced.

Each protrusion 200 has a rectangular shape extending straightly in the tire radial direction, and the tire radial direction and the lengthwise direction of the rectangular shape may be tilted from each other. In this case, the angle $\theta$ between the protrusion center line Lm set at the center M of the protrusion 200 in the tire circumferential direction and the tire normal line may be $|\theta| \leq 60°$.

Moreover, each protrusion 200 may be arranged such that the lengthwise direction of the rectangular shape of the protrusion 200 and the tire radial direction (i.e. the tire normal line lh) coincide with each other and that the tread width direction and the widthwise direction of the rectangular shape coincide with each other. By such an arrangement, it is possible to efficiently produce a pressure difference between the front and rear of the protrusion 200.

The length Lw of each protrusion 200 in the tread width direction satisfies Lw $\leq$ (SW-TW)/2. That is, the protrusion 200 does not protrude beyond the total width SW of the pneumatic tire 1 outwardly in the tread width direction. It is undesirable for the protrusion 200 to have its end beyond the total width SW of the pneumatic tire 1 because such a state increases the risk of the end contacting obstacles or the like.

The length Lh of each protrusion 200 in the tire radial direction satisfies $0.10 \leq Lh/H$. That is, when the length Lh of the protrusion 200 in the tire radial direction is below 10% of that of the land-portion block 100, the effect of generating the airflows AR upon the rotations of the pneumatic tire 1 in the directions R1 and R2 becomes low. This makes it difficult to improve the heat transfer coefficient inside each lateral groove 40A.

The length Lw of each protrusion 200 in the tread width direction from the side surface of the land-portion block 100 satisfies $0 \leq p/LW < 20$. When p/LW exceeds this range, i.e. when the protrusion 200 is too far from the lateral groove 40, the effect of generating the airflows AR becomes low. Moreover, the protrusion 200 is such that the length p from the end portion 102 of the side surface 101 of the land-portion block 100 in the tire circumferential direction to the protrusion center line Lm set at the center M of the protrusion 200 in the tire circumferential direction and extending in the lengthwise direction of the protrusion 200 satisfies $p < 0.4W$. Alternatively, $p < 0.3W$ may be employed. $p < 0.3W$ can increase the amount of airflow AR flowing from the outside to the inside of the lateral groove 40A during the rotation in the direction R1 described in Portion (a) of Fig. 5. $p < 0.4W$ can increase the amount of airflow AR flowing from the lateral groove 40A to the outside during the rotation in the direction R2 described in Portion (b) of Fig. 5.

$2.00 \leq W/Lw$ and $0 < Lr/W \leq 0.5$ are satisfied, where W is the pitch of the lateral grooves 40, LW is the length of the protrusion 200 in the tread width direction, and Lr is the length of the protrusion 200 in the tire circumferential direction. It is undesirable to reduce the pitch of the lateral grooves 40 because such reduction makes it difficult for air to enter the lateral groove 40. Moreover, since the protrusion 200 is made of rubber, excessively increasing the width of the protrusion 200 may lead to poor heat dissipation performance.

(4) Modifications

(4-1) Block Shape

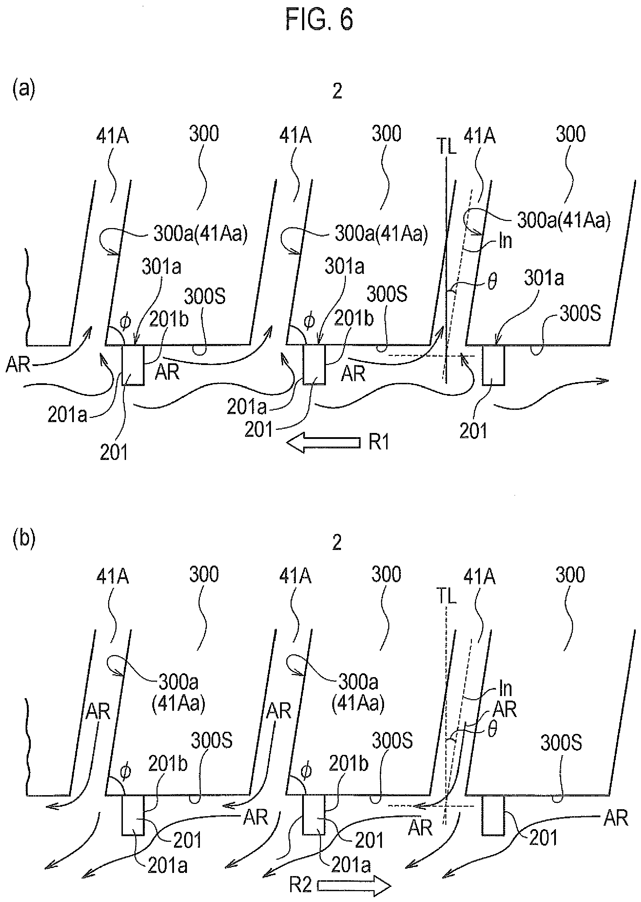

Fig. 6 is a plan view of a pneumatic tire 2 seen in a direction perpendicular to its tread portion, the pneumatic tire 2 being shown as a modification of the embodiment. In the pneumatic tire 2, lateral grooves 41A are formed in each of the circumferential land portions 30A, 30B, and 30C. A center line ln of each lateral groove 41A extending in the extending direction of the lateral groove 41A is tilted at an angle 0 with respect to a tread-width-direction line TL extending in the tread width direction. Moreover, a protrusion 201 is provided in an end-portion region 301a of each land-portion block 300 on a side

where an angle φ between a side surface 300s and a side surface 300a (a wall surface 41Aa of the lateral groove 41A) of the land-portion block 300 is an acute angle.

Portion (a) of Fig. 6 is a schematic view describing airflows generated when the pneumatic tire 2 is rotated in the rotation direction R1, while Portion (b) of Fig. 6 is a schematic view describing airflows generated when the pneumatic tire 2 is rotated in the rotation direction R2.

As shown in Portion (a) of Fig. 6, when the pneumatic tire 2 is rotated in the rotation direction R1, airflows (relative winds) AR resulting from the rotation hit side surfaces 201a of the protrusions 201 and are taken into the lateral grooves 41A. Since the lateral grooves 41A are tilted, the airflows AR are more likely to be taken into the lateral grooves 41A.

Moreover, as shown in Portion (b) of Fig. 6, when the pneumatic tire 1 is rotated in the rotation direction R2, airflows (relative winds) AR resulting from the rotation hit side surfaces 201b of the protrusions 201 and flow over the protrusions 201. When this occurs, an airflow toward the outer side in the width direction is generated in the rear, in the rotation direction, of the side surface 201b of each of the protrusions 201. These airflows draw air through the lateral grooves 41A and thus generate the airflows AR flowing outward from the lateral grooves 41A. Moreover, since the lateral grooves 41A are tilted, the air is more likely to flow outward from the lateral grooves 41A. As a result, the heat transfer coefficient inside the lateral grooves 41A is improved. Accordingly, the effect of lowering the temperature of the land-portion blocks 300 can be enhanced.

(4-2) Arrangement of Protrusions

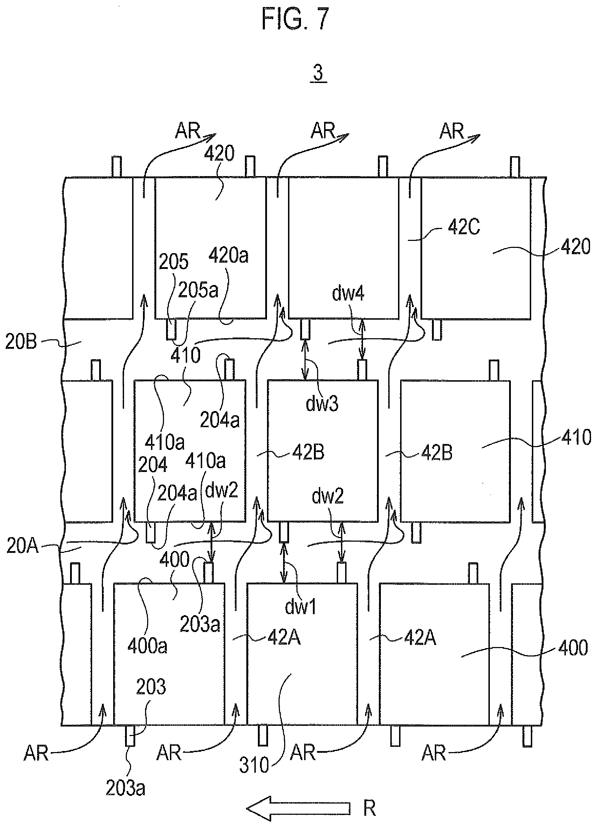

Fig. 7 is a plan view of a pneumatic tire 3 seen in a direction perpendicular to its tread portion, the pneumatic tire 3 being shown as a modification of the embodiment. The pneumatic tire 3 includes: bead portions; sidewall portions continuously extended from the bead portions, respectively; a tread portion configured to come into contact with the road surface; and buttress portions extending inward in the tire radial direction from tread end portions, which are outer end portions of the tread portion in the tread width direction, and continuously extended from the sidewall portions, respectively.

Formed in the tread portion of the pneumatic tire 3 are: multiple lateral grooves 42A, 42B, and 42C crossing the tire circumferential direction; circumferential grooves 20A and 20B extending in the tire circumferential direction; and land portions 400, 410, and 420 defined by the lateral grooves 42A, 42B, and 42C and the circumferential grooves 20A and 20B extending in the tire circumferential direction.

In the pneumatic tire 3, protrusions 203 are formed on the side surfaces of the land portions 400, 410, and 420, respectively, the side surfaces crossing a tread witch direction W. The protrusions 203 protrudes in the tread width direction W from the side surfaces of the land portions 400, 410, and 420 and extends in the tire radial direction.

An air gap dw2 is formed between an outermost portion 203a which is the most protruded portion of the protrusion 203 from a side surface 400a of its land portion 400 in the tread width direction, and a side surface 410a of the land portion 410 adjacent in the tread width direction, the side surface 410a crossing the tread width direction.

Similarly, an air gap dw1 is formed between an outermost portion 204a and the side surface 400a. Moreover, an air gap dw4 is formed between the other outermost portion 204a and a side surface 420a. Furthermore, an air gap dw3 between an outermost portion 205a and the other side surface 410a.

As described above, in the pneumatic tire 3, the protrusions 203, 204, and 205 are formed on the side surfaces 410a, 420a, and 430a of the land portions 400, 410, and 420. Thus, air flowing over the surface of the tire and through the circumferential grooves 20A and 30B hits the protrusions 203, 204, and 205 and gets disturbed. Since the protrusions 203, 204, and 205 are formed near the lateral grooves 42A, 42B, and 42C formed between the land portions 400, 410, and 420, airflows around the tire are disturbed by the protrusions 203, 204, and 205 and thereby taken into the lateral grooves 42A, 42B, and 42C.

The air gaps dw1 to dw4 are formed between the outermost portions 203a, 204a, and 205a, which are the most protruded portions from the side surfaces 400a, 410a, and 420a in the tread width direction, and the side surfaces opposite thereto. Thus, air taken into the circumferential grooves 20A and 30B flows into the lateral grooves 42A, 42B, and 42C. As a result, the heat transfer coefficients inside the lateral grooves 42A, 42B, and 42C are improved. Accordingly, the temperatures of the land portions 400, 410, and 420 can be lowered. Further, the temperature of the tread portion can be lowered.

The protrusion 203 can be provided on one side of the side surface of the land-portion block 400 at a position where an airflow AR is more likely to be taken in, and also on the other side of the side surface of the land-portion block 400 at a position where an airflow AR is more likely to be formed in a direction to suck air out. The air gaps dw1 to dw4 may all be the same or different.

(5) Other Embodiments

As described above, the contents of the present invention have been disclosed through a modification of the embodiment. However, it should not be understood that the description and drawings which constitute part of this disclosure limit the present invention. From this disclosure, various alternative embodiments and examples will be apparent to those skilled in the art. For example, the embodiment of the present invention can be changed in the following ways.

The pneumatic tire according to the embodiment can be significantly effective when applied to what is called a giant tire, but the pneumatic tire can be applied to a general-purpose tire. By forming protrusions protruding in the tread width direction in each buttress portion, it is possible to improve the heat transfer coefficient of the pneumatic tire and thus reduce increase in the temperature of the tread surface under a situation such as traveling at a high speed or traveling on a rough road in which the tread is more likely to generate heat.

The above embodiment has described that the lateral groove portions (the lateral grooves 40, the lateral grooves 41, the lateral grooves 42, etc.) are all formed at the same angle with respect to the tire circumferential direction. However, in the same pneumatic tire, the angles of the lateral groove portions with respect to the tire circumferential direction may not necessarily be the same. For example, they may be formed at angles that differ among the circumferential land portions 30A, 30B, and 30C. Further, lateral groove portions with a different angle may be formed only in the circumferential land portion 30A.

Figs. 1 to 5 mentioned above have shown that the shape of each protrusion is rectangular. However, the protrusion can be modified as below. Portions (a) to (g) of Fig. 8 are perspective views showing modifications of the shape of the protrusion.

In the case of a protrusion 210 shown in Portion (a) of Fig. 8, the cross-sectional shape perpendicular to the lengthwise direction of the protrusion 210 is a triangular shape. In the case of a protrusion 211 shown in Portion (b) of Fig. 8, the cross-sectional shape perpendicular to the lengthwise direction of the protrusion 211 is a trapezoidal shape with its long side being the root of the protrusion 211 attached to the buttress portion 14. In the case of a protrusion 212 shown in Portion (c) of Fig. 8, the cross-sectional shape perpendicular to the lengthwise direction of the protrusion 212 is a trapezoidal shape with its short side being the root of the protrusion 212 attached to the buttress portion 14. In the case of a protrusion 213 shown in Portion (d) of Fig. 8, the cross-sectional shape perpendicular to the lengthwise direction of the protrusion 213 is a shape having a slope facing one side in a rotation direction. A protrusion 214 shown in Portion (e) of Fig. 8 has a parallelogram shape in a plan view seen in a direction along the axis of rotation of the tire. A protrusion 215 shown in Portion (f) of Fig. 8 has a shape having a smaller width at a center portion in the lengthwise direction than at end portions in the lengthwise direction, in a plan view seen in the direction along the axis of rotation of the tire. A protrusion 216 shown in Portion (g) of Fig. 8 has an elliptical shape in a plan view seen in the direction along the axis of rotation of the tire. Structures other than those described in the above examples can be employed as long as they can produce the effect of disturbing air flowing over the surface of the tire.

As described above, the present invention naturally includes various embodiments and the like which are not described herein. Accordingly, the technical scope of the present invention is determined only by the matters to define the invention in the claims regarded as appropriate based on the above description.

**INDUSTRIAL APPLICABILITY**

The present invention can provide a tire capable of securely achieving improved heat dissipation performance without impairing the rigidity and wear resistance of its tread portion.

**Claims**

1.  A tire (1) comprising:

    a bead portion (11);
    a sidewall portion (12) continuously extended from the bead portion (11);
    a tread portion (13) that comes into contact with a road surface; and
    a buttress portion (14) extending inward in a tire radial direction from a tread end portion (13e) and continuously extended from the sidewall portion (12), the tread end portion (13e) being an outer end portion of the tread portion (13) in a tread width direction (W), wherein
    first protrusions (203, 205) protruding in the tread width direction (W) are formed in the buttress portions (14), and wherein
    the first protrusions (203, 205) are configured not to come into contact with the ground during normal travel when the tire (1) is in brand-new condition,
    the tread portion (13) comprising:

        circumferential grooves (20A, 20B) extending in the tire circumferential direction;
        lateral grooves (42A, 42B, 42C) extending in the tire width direction (W) crossing the circumferential grooves (20A, 20B);
        land portions (400, 410, 420) defined by the circumferential grooves (20A, 20B) and the lateral grooves (42A, 42B, 42C), the first protrusions (203, 205) being formed on and protruding in the tread width direction (W) from first side surfaces (400a, 420a) of the land portions (400, 410, 420); and
        second protrusions (203, 204, 205) formed on and protruding in the tread width direction (W) from second side surfaces (400a, 410a, 420a) of the land portions (400, 420, 430), the second side surfaces (400a, 410a, 420a) crossing the tread width direction (W).

2.  A tire (1) comprising:

    a bead portion (11);
    a sidewall portion (12) continuously extended from the bead portion (11);
    a tread portion (13) that comes into contact with a road surface; and
    a buttress portion (14) extending inward in a tire radial direction from a tread end portion (13e) and continuously extended from the sidewall portion (12), the tread end portion (13e) being an outer end portion of the tread portion (13) in a tread width direction (W), wherein
    a rotation direction of the tire during forward travel of a vehicle is fixed,
    a plurality of lateral groove portions (42A, 42B, 42C), a circumferential groove portion (20A, 20B), and land portions (400, 410, 420) are formed in the tread portion (13), the lateral groove portions (42A, 42B, 42C) crossing a tire circumferential direction, the circumferential groove portion (20A, 20B) extending in the tire circumferential direction, the land portions (400, 410, 420) being defined by the lateral groove portions (42A, 42B, 42C) and the circumferential groove portion (20A, 20B),
    a protrusion (203, 204, 205) is formed on a side surface (400a, 410a, 420a) of each of the land portions (400, 410, 420) that crosses the tread width direction (W), the protrusion (203, 204, 205) protruding in the tread width direction (W) from the side surface (400a, 410a, 420a) and extending in the tire radial direction, and
    an air gap (dw1, dw2, dw3, dw4) is formed between a most protruded portion (203a, 204a, 205a) of the protrusion (203, 204, 205) from the side surface (400a, 410a, 420a) in the tread width direction (W) and a side surface (400a, 410a, 420a) of an adjacent land portion (400, 410, 420) in the tread width direction (W), and wherein
    the protrusion (203, 204, 205) is configured not to come into contact with the ground during normal travel when the tire (1) is in brand-new condition.

3.  The tire (1) according to claim 1 or 2, wherein each protrusion (203, 204, 205) is formed near the lateral groove or lateral groove portion (42A, 42B, 42C) located on one side with respect to a center of the corresponding land portion (400, 410, 420) in the circumferential direction, and
    the other side of the side surface (400a, 410a, 420a) with respect to the center of the corresponding land portion (400, 410, 420) in the circumferential direction is almost flat and smooth.

4.  The tire (1) according to claim 1 or 2, wherein,

each protrusion (203, 204, 205) has a rectangular shape extending in the tire radial direction, and p < 0.4W is satisfied, where p is a length, within a section of the land portion (400, 410, 420) defined by the lateral grooves or lateral groove portions (42A, 42B, 42C), from an end portion of the side surface (400a, 410a, 420a) in the tire circumferential direction to a protrusion center line set at a center of the corresponding protrusion (203, 204, 205) in the tire circumferential direction and extending in a lengthwise direction of the corresponding protrusion (203, 204, 205), and W is a pitch of the lateral grooves or lateral groove portions (42A, 42B, 42C) between the land portions (400, 410, 420).

5. The tire (1) according to claim 4, wherein an angle $\theta$ between the protrusion center line and a tire normal line satisfies $|\theta| \leq 60°$.

6. The tire (1) according to claim 5, wherein the tire normal line coincides with the lengthwise direction of the rectangular shape.

7. The tire (1) according to claim 1 or 2, wherein 2.00 $\leq$ W/Lw is satisfied, where Lw is a length of each protrusion (203, 204, 205) in the tread width direction, and W is a pitch of the lateral grooves or lateral groove portions (42A, 42B, 42C).

8. The tire (1) according to claim 1 or 2, wherein 0 $\leq$ Lr < WB/2 is satisfied, where WB is a length of each of the land portions (400, 410, 420) in the tire circumferential direction, and Lr is a length of each protrusion (203, 204, 205) in the tire circumferential direction.

9. The tire (1) according to claim 1 or 2, wherein 0.10 $\leq$ Lh/H is satisfied, where Lh is a length of each protrusion (203, 204, 205) in the tire radial direction, and H is a length of each of the land portions (400, 410, 420) in the tire radial direction from a groove bottom of each of the lateral grooves or lateral groove portions (42A, 42B, 42C) defining the land portions (400, 410, 420).

10. The tire (1) according to claim 1 or 2, wherein the lateral grooves or lateral groove portions (42A, 42B, 42C) are tilted with respect to a tread-width-direction line extending in the tread width direction (W), and
each protrusion (203, 204, 205) is provided in an end-portion region including an end portion of the corresponding land portion (400, 410, 420) on a side where an angle ($\phi$) between a side surface of the land portion (400, 410, 420) extending in the tire circumferential direction and a wall surface of the corresponding lateral groove or lateral groove portion (42A, 42B, 42C) is an acute angle.

**Patentansprüche**

1. Reifen (1), umfassend:

einen Wulstabschnitt (11);
einen Seitenwandabschnitt (12), welcher sich kontinuierlich vom Wulstabschnitt (11) erstreckt;
einen Laufflächenabschnitt (13), welcher mit einer Straßenoberfläche in Kontakt kommt; und
einen Stützabschnitt (14), welcher sich nach innen in einer Reifenradialrichtung von einem Laufflächenendabschnitt (13e) erstreckt und sich kontinuierlich vom Seitenwandabschnitt (12) erstreckt, wobei der Laufflächenendabschnitt (13e) ein äußerer Endabschnitt des Laufflächenabschnitts (13a) in einer Laufflächenbreitenrichtung (W) ist, wobei
erste Vorsprünge (203, 205), welche in der Laufflächenbreitenrichtung (W) vorstehen, in den Stützabschnitten (14) gebildet sind, und wobei die ersten Vorsprünge (203, 205) konfiguriert sind, um nicht in Kontakt mit dem Boden unter normalen Fahrbedingungen zu kommen, wenn der Reifen (1) in einem brandneuen Zustand ist, wobei der Laufflächenabschnitt (13) umfasst:

Umfangsrillen (20A, 20B), welche sich in der Reifenumfangsrichtung erstrecken;
Seitenrillen (42A, 42B, 42C), welche sich in der Reifenbreitenrichtung (W) erstrecken und die Umfangsrillen (20A, 20B) kreuzen;
Stegabschnitte (400, 410, 420), welche von den Umfangsrillen (20A, 20B) und den Seitenrillen (42A, 42B, 42C) definiert sind, wobei die ersten Vorsprünge (203, 205) auf ersten Seitenflächen (400a, 420a) der Stegabschnitte (400, 410, 420) gebildet sind und von diesen in der Laufflächenbreitenrichtung (W) vorstehen; und
zweite Vorsprünge (203, 204, 205), welche auf zweite Seitenflächen (400a, 410a, 420a) der Stegabschnitte (400, 410, 420) gebildet sind und von diesen in der Laufflächenbreitenrichtung (W) vorstehen, wobei die zweiten Seitenflächen (400a, 410a, 420a) die Laufflächenbreitenrichtung (W) kreuzen.

2. Reifen (1) umfassend:

einen Wulstabschnitt (11);
einen Seitenwandabschnitt (12), welcher sich kontinuierlich vom Wulstabschnitt (11) erstreckt;
einen Laufflächenabschnitt (13), welcher mit einer Straßenoberfläche in Kontakt kommt; und
einen Stützabschnitt (14), welcher sich nach innen in einer Reifenradialrichtung von einem Laufflächenendabschnitt (13e) erstreckt und sich kontinuierlich vom Seitenwandabschnitt (12) erstreckt, wobei der Laufflächenendabschnitt (13e) ein äußerer Endabschnitt des Laufflächenabschnitts (13) in einer Laufflächenbreitenrichtung (W) ist, wobei

eine Drehrichtung des Reifens während der Vorwärtsfahrt eines Fahrzeugs festgelegt ist,

eine Mehrzahl von Seitenrillenabschnitten (42A, 42B, 42C), ein Umfangsrillenabschnitt (20A, 20B), und Stegabschnitte (400, 410, 420) in dem Laufflächenabschnitt (13) gebildet sind, wobei die Seitenrillenabschnitte (42A, 42B, 42C) die Reifenumfangsrichtung kreuzen, wobei der Umfangsrillenabschnitt (20A, 20B) sich in der Reifenumfangsrichtung erstreckt, wobei die Stegabschnitte (400, 410, 420) von den Seitenrillenabschnitten (42A, 42B, 42C) und den Umfangsrillenabschnitten (20A, 20B) definiert sind,

ein Vorsprung (203, 204, 205) auf einer Seitenfläche (400a, 410a, 420a) jedes Stegabschnitts (400, 410, 420) gebildet ist, welcher die Laufflächenbreitenrichtung (W) kreuzt, wobei der Vorsprung (203, 204, 205) von der Seitenfläche (400a, 410a, 420a) in der Laufflächenbreitenrichtung (W) vorsteht und sich in der Reifenradialrichtung erstreckt, und

ein Luftspalt (dw1, dw2, dw3, dw4) zwischen dem von der Seitenfläche (400a, 410a, 420a) in der Laufflächenbreitenrichtung (W) am weitesten vorstehenden Abschnitt (203a, 204a, 205a) des Vorsprungs (203, 204, 205) und einer Seitenfläche (400a, 410a, 420a) eines angrenzenden Stegabschnitts (400, 410, 420) in der Laufflächenbreitenrichtung (W) gebildet ist, und wobei

der Vorsprung (203, 204, 205) konfiguriert ist, um nicht in Kontakt mit dem Boden unter normalen Fahrbedingungen zu kommen, wenn der Reifen (1) in einem brandneuen Zustand ist.

3. Reifen (1) nach Anspruch 1 oder 2, wobei
jeder Vorsprung (203, 204, 205) in der Nähe der Seitenrille oder des Seitenrillenabschnitts (42A, 42B, 42C) gebildet ist, welcher auf einer Seite relativ zum Mittelpunkt des entsprechenden Stegabschnitts (400, 410, 420) in der Umfangsrichtung angeordnet ist, und
die andere Seite der Seitenfläche (400a, 410a, 420a) relativ zum Mittelpunkt des entsprechenden Stegabschnitts (400, 410, 420) in der Umfangsrichtung fast flach und glatt ist.

4. Reifen (1) nach Anspruch 1 oder 2, wobei
jeder Vorsprung (203, 204, 205) eine rechteckige Form aufweist, welche sich in der Reifenradialrichtung erstreckt, und

p < 0,4W erfüllt ist, wobei p eine Länge innerhalb eines Bereichs des Stegabschnitts (400, 410, 420) ist, welcher von den Seitenrillen oder den Seitenrillenabschnitten (42A, 42B, 42C) definiert ist, von einem Endabschnitt der Seitenfläche (400a, 410a, 420a) in der Reifenumfangsrichtung bis zu einer Vorsprungsmittellinie, welche im Mittelpunkt des entsprechenden Vorsprungs (203, 204, 205) in der Reifenumfangsrichtung gesetzt ist, und welche sich in der Längsrichtung des entsprechenden Vorsprungs (203, 204, 205) erstreckt, und wobei W die Steigung der Seitenrillen oder der Seitenrillenabschnitten (42A, 42B, 42C) zwischen den Stegabschnitten (400, 410, 420) ist.

5. Reifen (1) nach Anspruch 4, wobei der Winkel θ zwischen der Vorsprungsmittellinie und einer Reifennormale die Bedingung |θ| ≤ 60° erfüllt.

6. Reifen (1) nach Anspruch 5, wobei die Reifennormale mit der Längsrichtung der rechteckigen Form übereinstimmt.

7. Reifen (1) nach Anspruch 1 oder 2, wobei 2,00 ≤ W/Lw erfüllt ist, wobei Lw die Länge jedes Vorsprungs (203, 204, 205) in der Laufflächenbreitenrichtung ist, und W die Steigung der Seitenrillen oder der Seitenrillenabschnitte (42A, 42B, 42C) ist.

8. Reifen (1) nach Anspruch 1 oder 2, wobei 0 ≤ Lr ≤ WB/2 erfüllt ist, wobei WB die Länge jedes Stegabschnitts (400, 410, 420) in der Reifenumfangsrichtung ist, und Lr die Länge jedes Vorsprungs (203, 204, 205) in der Reifenumfangsrichtung ist.

9. Reifen (1) nach Anspruch 1 oder 2, wobei 0,10 ≤ Lh/H erfüllt ist, wobei Lh die Länge jedes Vorsprungs (203, 204, 205) in der Reifenradialrichtung ist, und H die Länge jedes Stegabschnitts (400, 410, 420) in der Reifenradialrichtung von einem Rillengrund jeder Seitenrille oder Seitenrillenabschnitts (42A, 42B, 42C) ist, welcher die Stegabschnitte (400, 410, 420) definiert.

10. Reifen (1) nach Anspruch 1 oder 2, wobei
die Seitenrillen oder Seitenrillenabschnitte (42A, 42B, 42C) relativ zu einer Laufflächenbreitenrichtungslinie geneigt sind, welche sich in der Laufflächenbreitenrichtung (W) erstreckt, und
jeder Vorsprung (203, 204, 205) in einem Endabschnittsbereich vorgesehen ist, welcher einen Endabschnitt des entsprechenden Stegabschnitts (400, 410, 420) umfasst, auf einer Seite, wo der Winkel (φ) zwischen einer Seitenfläche des Stegabschnitts (400, 410, 420), welche sich in der Reifenumfangsrichtung erstreckt, und einer Wandfläche der entsprechenden Seitenrille oder des Seitenrillenabschnitts (42A, 42B, 42C) ein spitzer Winkel ist.

**Revendications**

1. Bandage pneumatique (1), comprenant :

  une partie de talon (11) ;
  une partie de flanc (12) s'étendant en continu à partir de la partie de talon (11) ;
  une partie de bande de roulement (13), entrant en contact avec la surface d'une route ; et
  une partie de contrefort (14) s'étendant vers l'intérieur dans une direction radiale du bandage pneumatique à partir d'une partie d'extrémité de la bande de roulement (13e) et s'étendant en continu à partir de la partie de flanc (12), la partie d'extrémité de la bande de roulement (13e) constituant une partie d'extrémité externe de la partie de bande de roulement (13a), dans une direction de la largeur de la bande de roulement (W) ; dans lequel :

    des premières saillies (203, 205) débordant dans la direction de la largeur de la bande de roulement (W) sont formées dans les parties de contrefort (14) ; et dans lequel :

  les premières saillies (203, 205) sont configurées pour ne pas entrer en contact avec le sol au cours d'un roulement normal lorsque le bandage pneumatique (1) se trouve dans un état flambant neuf ;
  la partie de bande de roulement (13) comprenant :

    des rainures circonférentielles (20A, 20B) s'étendant dans la direction circonférentielle du bandage pneumatique ;
    des rainures latérales (42A, 42B, 42C) s'étendant dans la direction de la largeur du bandage pneumatique (W), croisant les rainures circonférentielles (20A, 20B) ;
    des parties d'appui (400, 410, 420) définies par les rainures circonférentielles (20A, 20B) et les rainures latérales (42A, 42B, 42C), les premières saillies (203, 205) étant formées sur des premières surfaces latérales (400a, 420a) des parties d'appui (400, 410, 420) et débordant de celles-ci dans la direction de la largeur de la bande de roulement (W) ; et
    des deuxièmes saillies (203, 204, 205) formées dans la direction de la largeur de la bande de roulement (W) sur des deuxièmes surfaces latérales (400a, 410a, 420a) des parties d'appui (400, 420, 430) et débordant de celles-ci, les deuxièmes surfaces latérales (400a, 410a, 420a) croisant la direction de la largeur de la bande de roulement (W).

2. Bandage pneumatique (1), comprenant :

  une partie de talon (11) ;
  une partie de flanc (12) s'étendant en continu à partir de la partie de talon (11) ;
  une partie de bande de roulement (13) entrant en contact avec la surface d'une route ; et
  une partie de contrefort (14) s'étendant vers l'intérieur, dans une direction radiale du bandage pneumatique, à partir d'une partie d'extrémité de la bande de roulement (13e) et s'étendant en continu à partir de la partie de flanc (12), la partie d'extrémité de la bande de roulement (13e) constituant une partie d'extrémité externe de la partie de bande de roulement (13), dans une direction de la largeur de la bande de roulement (W) ; dans lequel :

    une direction de rotation du bandage pneumatique pendant le roulement vers l'avant d'un véhicule est fixe ;
    plusieurs parties de rainures latérales (42A, 42B, 42C), une partie de rainure circonférentielle (20A, 20B), et des parties d'appui (400, 410, 420) sont formées dans la partie de bande de roulement (13), les parties de rainures latérales (42A, 42B, 42C) croisant une direction circonférentielle du bandage pneumatique, la partie de rainure circonférentielle (20A, 20B) s'étendant dans la direction circonférentielle du bandage pneumatique, les parties d'appui (400, 410, 420) étant définies par les parties de rainures latérales (42A, 42B, 42C) et la partie de rainure circonférentielle (20A, 20B) ;
    une saillie (203, 204, 205) est formée sur une surface latérale (400a, 410a, 420a) de chacune des parties d'appui (400, 410, 420), croisant la direction de la largeur de la bande de roulement (W), la saillie (203, 204, 205) débordant dans la direction de la largeur de la bande de roulement (W) de la surface latérale (400a, 410a, 420a) et s'étendant dans la direction radiale du bandage pneumatique ; et
    un espace d'air (dw1, dw2, dw3, dw4) est formé entre la partie la plus en saillie (203a, 204a, 205a) de la saillie (203, 204, 205) débordant de la surface latérale (400a, 410a, 420a) dans la direction de la largeur de la bande de roulement (W) et d'une surface latérale (400a, 410a, 420a) d'une partie d'appui adjacente (400, 410, 420) dans la direction de la largeur de la bande de roulement (W) ; et dans lequel :

  la saillie (203, 204, 205) est configurée pour ne pas entrer en contact avec le sol au cours du roulement normal lorsque le bandage pneumatique (1) se trouve dans un état flambant neuf.

3. Bandage pneumatique (1) selon les revendications 1 ou 2, dans lequel :

chaque saillie (203, 204, 205) est formée près de la rainure latérale ou de la partie de rainure latérale (42A, 42B, 42C) agencée sur un côté par rapport à un centre de la partie d'appui correspondante (400, 410, 420) dans la direction circonférentielle ; et
l'autre côté de la surface latérale (400a, 410a, 420a) par rapport au centre de la partie d'appui correspondante (400, 410, 420), dans la direction circonférentielle, est presque plat et lisse.

4. Bandage pneumatique (1) selon les revendications 1 ou 2, dans lequel ;
chaque saillie (203, 204, 205) a une forme rectangulaire s'étendant dans la direction radiale du bandage pneumatique ; et
la relation de p < 0,4W est satisfaite, p représentant une longueur, dans une section de la partie d'appui (400, 410, 420) définie par les rainures latérales ou les parties de rainures latérales (42A, 42B, 42C), d'une partie d'extrémité de la surface latérale (400a, 410a, 420a), dans la direction circonférentielle du bandage pneumatique vers une ligne médiane de la saillie agencée au niveau d'un centre de la saillie correspondante (203, 204, 205), dans la direction circonférentielle du bandage pneumatique, et s'étendant dans une direction de la longueur de la saillie correspondante (203, 204, 205), et W représentant un pas des rainures latérales ou des parties de rainures latérales (42A, 42B, 42C) entre les parties d'appui (400, 410, 420).

5. Bandage pneumatique (1) selon la revendication 4, dans lequel un angle θ entre la ligne médiane de la saillie et une ligne normale du bandage pneumatique satisfait la relation de |θ| ≤ 60°.

6. Bandage pneumatique (1) selon la revendication 5, dans lequel la ligne normale du bandage pneumatique coïncide avec la direction dans le sens de la longueur de la forme rectangulaire.

7. Bandage pneumatique (1) selon les revendications 1 ou 2, dans lequel la relation de 2,00 ≤ W/Lw est satisfaite, Lw représentant une longueur de chaque saillie (203, 204, 205) dans la direction de la largeur de la bande de roulement, et W représentant un pas des rainures latérales ou des parties de rainures latérales (42A, 42B, 42C).

8. Bandage pneumatique (1) selon les revendications 1 ou 2, dans lequel la relation de 0 ≤ Lr < WB/E est satisfaite, WB représentant une longueur de chacune des parties d'appui (400, 410, 420) dans la direction circonférentielle du bandage pneumatique, et Lr représentant une longueur de chaque saillie (203, 204, 205) dans la direction circonférentielle du bandage pneumatique.

9. Bandage pneumatique (1) selon les revendications 1 ou 2, dans lequel la relation de 0,10 ≤ Lh/H est satisfaite, Lh représentant une longueur de chaque saillie (203, 204, 205) dans la direction radiale du bandage pneumatique, et H représentant une longueur de chacune des parties d'appui (400, 410, 420) dans la direction radiale du bandage pneumatique, à partir d'un fond de rainure de chacune des rainures latérales ou des parties de rainures latérales (42A, 42B, 42C) définissant les parties d'appui (400, 410, 420).

10. Bandage pneumatique (1) selon les revendications 1 ou 2, dans lequel :

les rainures latérales ou les parties de rainures latérales (42A, 42B, 42C) sont inclinées par rapport à une ligne dans la direction de la largeur de la bande de roulement s'étendant dans la direction de la largeur de la bande de roulement (W) ; et
chaque saillie (203, 204, 205) est agencée dans une région de partie d'extrémité incluant une partie d'extrémité de la partie d'appui correspondante (400, 410, 420) sur un côté où un angle (Φ) entre une surface latérale de la partie d'appui (400, 410, 420) s'étendant dans la direction circonférentielle du bandage pneumatique et une surface de paroi de la rainure latérale correspondante ou de la partie de rainure latérale (42A, 42B, 42C) est un angle aigu.

# FIG. 1

# FIG. 2

## FIG. 3

# FIG. 4

# FIG. 5

(a)

(b)

# FIG. 6

(a)

(b)

## FIG. 7

<u>3</u>

# FIG. 8

(a)

210  14

(b)

211  14

(c)

212  14

(d)

213  14

(e)

214  14

(f)

215  14

(g)

216  14

EP 2 610 079 B1

**EP 2 610 079 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007030547 A
- JP 2009268809 A
- JP 2003205706 A